# EUROPÄISCHE PATENTSCHRIFT

(11) **EP 1 900 949 B1**
(45) Veröffentlichungstag und Bekanntmachung des Hinweises auf die Patenterteilung: **17.10.2018**
(21) Anmeldenummer: 07114759.9
(22) Anmeldetag: 22.08.2007
(51) Int. Cl.: F16C 29/02, F16C 33/20

(54) **Gleitelement und Verfahren zu dessen Herstellung**
Sliding element and method for its manufacture
Elément coulissant et procédé de sa fabrication

(30) Priorität: 14.09.2006 DE 102006042999; 14.09.2006 DE 102006043065
(43) Veröffentlichungstag der Anmeldung: 19.03.2008
(73) Patentinhaber: Federal-Mogul Deva GmbH, 35260 Stadtallendorf (DE)
(72) Erfinder: Roos, Udo, 35315 Homburg/Ohm (DE); Laal Riahi, Kamran, 35037 Marburg (DE); Linker, Armin, 35260 Stadtallendorf (DE)
(74) Vertreter: Mehler Achler

(56) Entgegenhaltungen:
- WO-A1-2004/030880
- WO-A1-2004/094850
- WO-A1-2005/017240
- DE-A1- 1 927 181
- US-A- 5 470 414
- US-A1- 2002 155 287

## Beschreibung

Die Erfindung betrifft ein Gleitelement, insbesondere ein ebenes oder gebogenes Gleitelement mit sehr großem Krümmungsradius, welches wenigstens eine Gleitschicht auf Basis eines faserverstärkten Kunststoffes mit einer Kunststoffmatrix und einem wenigstens eine Faser oder einen Faden enthaltenden Verstärkungselement aufweist, und ein Verfahren zu dessen Herstellung.

Der Einsatz von Faserverbundwerkstoffen für Gleitlager, insbesondere auf Basis von Epoxydharzen ist bekannt. Solche Gleitlager bestehen bekanntermaßen aus einem einschichtigen Gleitschichtwerkstoff oder aus einem aus zwei Schichten, einer Tragschicht und einer Gleitschicht, aufgebauten Lagerwerkstoff. Eine Tragschicht ist typischerweise durch eine glasfaser- oder kohlefaserverstärkte Epoxydharzmatrix gekennzeichnet, welche ein sehr hohes Lastaufnahmevermögen aufweist. Hierauf ist eine Gleitschicht laminiert, die sich zumeist aus speziellen nicht- oder wenig abrasiven Kunststofffasern oder -fäden als Verstärkungselemente, Festschmierstoffen und ebenfalls einer Epoxydharzmatrix zusammensetzt. Die Zusammensetzung wird so eingestellt, dass sich die geforderten tribologischen Eigenschaften einstellen, die je nach Material und Beschaffenheit des Gegenläufers und den Umgebungsbedingungen (Nass- oder Trockenlauf) variieren.

Als Festschmierstoff der selbstschmierenden Gleitschicht ist unter anderem der Einsatz von PTFE (Polytetrafluorethylen) oder Graphit bekannt. Diese Substanzen werden entweder in Partikelform der Kunststoffmatrix beigemischt oder im Fall von PTFE in Form eines Filaments zusammen mit anderen Kunststofffilamenten zu dem Kunststofffaden der Gleitschicht verzwirnt. Als Fadenkunststoff wird im Übrigen bekanntermaßen meist Polyester eingesetzt.

Um aus solchen Kunststofffäden oder -fasern ebene Gleitelemente herzustellen, werden diese zunächst zu Fasermatten verwoben; die dann mit Kunstharz getränkt aufeinander laminiert werden. Dies geschieht beispielsweise im Injection-Mold-Verfahren, bei dem die Matten in eine Form gelegt werden, welche anschließend unter Druck mit dem Kunstharz gefüllt wird. Ein anderes Herstellungsverfahren verwendet im so genannten Prepreg-Verfahren vorimprägnierte Verstärkungselemente. Diese liegen beispielsweise in Form von unidirektionalen Fäden, ebenfalls in Form gewobener Fasermatten oder in beliebigen anderen Formen textiler Gelege vor. Die vorimprägnierten Verstärkungselemente (Prepregs) müssen zur Aufbewahrung gekühlt werden. Sie werden zur Weiterverarbeitung entsprechend dem fertigen Endprodukt vorkonfektioniert und schließlich im Press- oder Autoklav-Verfahren aufeinander laminiert.

Aufgrund der vielen einzelnen, zum Teil manuellen Bearbeitungsschritte vom Kunststofffaden bis zum fertigen Gleitelement entstehen relativ lange Produktionsnebenzeiten. Die Fertigung solcher Gleitelemente ist teuer.

Zur Herstellung von Lagerbuchsen oder Radialgleitlagern ist ferner das Wickel-Verfahren bekannt, bei dem auf einen um seine Längsachse drehbar angetriebenen Wickeldorn zunächst die Gleitschicht und darauf die Tragschicht in Form entweder jeweils eines mit dem Kunstharz getränkten Fadens bzw. einer Faser mit einer bestimmten Wickelstruktur oder in Form eines vorgefertigten textilen Geleges abgelegt wird. Das Wickeln stellt für rotationssymmetrische Gleitelemente ein einfaches und kostengünstiges Herstellungsverfahren dar. Jedoch eignet sich das bekannte Wickel-Verfahren nicht für die Herstellung von ebenen Gleitplatten oder gebogenen Gleitelementen mit sehr großem Krümmungsradius.

Aufgabe der vorliegenden Erfindung ist es, ein kostengünstiges und effizientes Verfahren zur Herstellung eines solchen Gleitelements bereitzustellen. Schließlich ist die Aufgabe, ein auf diese Weise hergestelltes Erzeugnis, nämlich ein kostengünstiges Gleitelement bereitzustellen.

Die Aufgabe wird durch ein Verfahren mit den Merkmalen des Anspruchs 1 und ein Gleitelement mit den Merkmalen des Anspruchs 11 gelöst. Vorteilhafte Weiterbildungen sind in den Unteransprüchen angegeben.

Das Verfahren zur Herstellung des eingangs beschriebenen Gleitelements erfolgt so, dass das Verstärkungselement unter Zugabe eines die Kunststoffmatrix bildenden Kunstharzes auf einem mehrkantigen Wickelkern abgelegt und dass der so gebildete rohrförmige, mehrkantige Wickelkörper nach Aushärtung in die zwischen den Kanten gebildeten Segmente zerlegt wird.

Eine Vorrichtung zur Herstellung eines Gleitelements weist demgemäß einen um seine Längsachse drehbar angetriebenen Wickelkern und eine Zuführung für das Verstärkungselement auf, wobei der Wickelkern mehrkantig ist.

Das Verstärkungselement kann so in Form eines vorgefertigten textilen Geleges auf dem um seine Längsachse drehenden Wickelkern abgelegt werden. Als Verstärkungselemente kommen eine Vielzahl textiler Gelege wie beispielsweise Gewebe, Gewirke, Gestrick oder Geflecht hierfür in Betracht.

Das Verstärkungselement kann aber auch in Form einzelner oder mehrer gebündelter Fäden um den mehrkantigen Wickelkern gelegt werden.

Bevorzugt ist die Zuführung hierzu relativ zum Wickelkern entlang dessen Längsachse hin- und her bewegbar angetriebenen. Die Vorrichtung weist ferner eine Steuerung für den Antrieb der Dreh- und der Hin- und Herbewegung auf, die eingerichtet ist, das Verstärkungselement mit einer bestimmten Wickelstruktur auf dem Wickelkern abzulegen.

Ein mittels einer solchen Vorrichtung hergestelltes Gleitelement weist ein Verstärkungselement mit einer Wickelstruktur auf, die durch Wickeln des Verstärkungselements, bevorzugt in Form eines oder mehrerer paralleler Fäden, auf einem mehrkantigen Wickelkern im Bereich der zwischen den Kanten gebildeten ebenen oder bogenförmigen Segmente erzeugt wurde.

Eine solche Wickelstruktur unterscheidet sich von den textilen Gelegestrukturen durch eine individuellere Anpassbarkeit an die Erfordernisse. Das Wickeln und damit die Wickelstrukturen haben nämlich den Vorteil, dass sie beanspruchungsgerecht, d.h. unter Berücksichtigung der Kraft- bzw. Spannungsverteilung gezielt im Faserverbund angeordnet werden können, indem der Verlauf der Fasern oder Fäden durch entsprechendes Programmieren der Steuerung eingestellt wird. Die Fasern oder Fäden werden auf diese Weise flächendeckend alternierend unter einem bestimmten Ablagewinkel aufgewickelt. Auch variable Wanddicken sind auf diese Weise herstellbar.

Zudem ist die Welligkeit der einzelnen Wickellagen im Vergleich zu Gewebelagen verringert, was die tribologische Eigenschaft der Wickelschicht gegenüber der eines Gewebes positiv beeinflusst.

Ebene oder beinahe ebene Schichten in der Wickeltechnik herzustellen wird erfindungsgemäß aber erst durch die Verwendung eines mehrkantigen Wickelkerns möglich. Zwischen den Kanten weist der Wickelkern hierzu bevorzugt ebene oder bogenförmige Segmente oder Wandabschnitte auf. Anders als bei der Herstellung von Gleitelementen mit kreisrundem Querschnitt bilden sich dadurch zwischen den Kanten Wickelkörpersegmente ebenfalls mit geradem oder bogenförmigem Querschnitt aus, die nach dem Aushärten des Wickelkörpers aus diesem ausgeschnitten werden und zu der fertigen Gleitelementen weiterverarbeitet werden können.

In der erfindungsgemäßen Ausführungsform des Gleitelements und im erfindungsgemäßen Verfahren ist der Faden ein Kunststofffaden aus Polyesterfilamenten, in welche nicht zusammenhängende PTFE-Partikel eingesponnen sind. Ein solcher Faden hat gegenüber den bekannten gezwirnten Fasern bestehend aus zwei Polyesterfilamenten und einem PTFE-Filament eine Vielzahl von Vorteilen. Zum einen besteht eine größere Variabilität bezüglich des Gehaltes der einzelnen Komponenten des Fadens/der Faser, insbesondere des PTFE-Gehalts. Daher lassen sich bereits bei der Herstellung des Kunststofffadens dessen Eigenschaften sehr viel präziser modifizieren. Aus dem Umstand, dass die PTFE-Partikel im Gegensatz zu dem PTFE-Filament nicht zusammenhängen, d.h durch die innerhalb der Polyesterfilamente zufällig angeordneten und verankerten PTFE-Partikel, erscheint der Kunststofffaden aufgeraut und es wird eine bessere Haftanbindung zwischen dem Kunststofffaden und der Kunststoffmatrix erreicht. Schließlich verstärkt die Einbindung der PTFE-Partikel in den Kunststofffaden den mechanischen Halt derselben vor allem durch Formschluss.

Im Ergebnis wird dadurch eine verbesserte mechanische Bearbeitbarkeit der Gleitschicht erzielt ohne die tribologischen Eigenschaften oder die Verschleißfestigkeit zu beeinträchtigen.

Bei dem erfindungsgemäßen Verfahren werden die Wickelkörpersegmente nach dem Heraustrennen deshalb bevorzugt spanabhebend nachbearbeitet.

Die Verwendung des Kunststofffadens mit PTFE-Partikeln in der Gleitschicht eignet sich insofern insbesondere für Präzisionsgleitelemente, die nach dem Wickeln und Aushärten sowie Segmentieren beispielsweise durch Schleifen oder Fräsen auf Endmaß nachbearbeitet werden müssen. Auch erschließt die Verwendung des Kunststofffadens mit PTFE-Partikeln andere Anwendungsformen, in denen beispielsweise Schmier- oder Schmutznuten in die Gleitschicht eingearbeitet werden müssen, mit deren Hilfe Partikel oder Schmierstoffe gezielt ab- oder zugeführt werden können.

In einer bevorzugten Weiterbildung des Verfahrens werden dem Kunstharz zusätzlich PTFE-Partikel beigemischt.

Weist das Gleitelement eine Tragschicht auf Basis eines faserverstärkten Kunststoffes mit einer Kunststoffmatrix und einer Faser bzw. einem Faden als Verstärkungselement auf, wird vorteilhafterweise entweder zunächst die Faser bzw. der Faden des Tragschichtkunststoffes und anschließend die Faser bzw. der Faden des Gleitschichtkunststoffes jeweils unter Zugabe eines die Kunststoffmatrix bildenden Kunstharzes und jeweils mit einer bestimmten Wickelstruktur auf den Wickelkern abgelegt oder umgekehrt zunächst die Faser bzw. der Faden des Gleitschichtkunststoffes und anschließend die Faser bzw. der Faden des Tragschichtkunststoffes.

Beide Schichten können auf diese Weise im Wickel-Verfahren auf derselben Wickelvorrichtung kostengünstig hergestellt werden. Insbesondere wenn die Kunststoffmatrix des Gleitschichtkunststoffes und des Tragschichtkunststoffes aus demselben Kunstharz, bevorzugt Epoxydharz, bestehen, erhöht sich die Effizienz des Herstellungsverfahrens. Wie auch für die Kunststoffmatrix der Gleitschicht eignet sich Epoxydharz auch als Kunststoffmatrix für die Tragschicht aufgrund hervorragender Haftungseigenschaften, mechanischer und dynamischer Eigenschaften. Epoxydharz weist aufgrund seiner molekularen Struktur ferner eine sehr gute Feuchtigkeitsbeständigkeit und vergleichsweise wenig Quellneigung auf. Aufgrund der Verwendung derselben Kunststoffmatrix in der Gleitschicht und der Tragschicht erhöhen sich zudem die Bindungskräfte zwischen der Gleitschicht und der Tragschicht.

Bei dem erfindungsgemäßen Verfahren ist es vorteilhaft, dass beim Ablegen der Faser bzw. des Fadens des Gleit- und/oder Tragschichtkunststoffes der Wickelkern um seine Längsachse gedreht und die Faser bzw. der Faden entlang der Längsachse des Wickelkerns in einer Hin- und Herbewegung zugeführt wird.

In einer anderen bevorzugten Ausführungsform werden gleichzeitig mehrere Fasern bzw. Fäden auf dem Wickelkern abgelegt. Dabei ist es vorteilhaft, wenn die mehreren Fasern beim Ablegen miteinander verflochten werden. Auf diese Weise können auch sehr komplexe Strukturen erzeugt werden.

Vorzugsweise wird der Wickelkern der Vorrichtung durch einen mehrkantigen Dorn gebildet. Dieser Dorn kann zur leichteren Entformung des beim Aushärten des Kunstharzes meist etwas aufgeschrumpften Wickelkörpers in Form eines Klappkerns ausgeführt sein. Ist der Dorn feststehend (einteilig) ausgeführt, ist er zur leichteren Entformung des ausgehärteten Wickelkörpers bevorzugt konisch ausgebildet.

Die Vorrichtung kann eine Abziehvorrichtung aufweisen, die eingerichtet ist, den auf dem Wickelkern abgelegten, rohrförmigen, mehrkantigen Wickelkörper nach Aushärten des Kunstharzes abzuziehen.

Alternativ weist der Wickelkern wenigstens zwei im Wesentlichen parallele, um eine gemeinsame Zentrumsachse drehbar gelagerte Stangen auf.

Bei einer solchen Vorrichtung werden die Fäden bzw. Fasern um die wenigstens zwei Stangen gewickelt, so dass sich zwischen den Stangen ebene Flächen ausbilden. Da das Kunstharz beim Wickeln zunächst noch flüssig ist, sind die Stangen zweckmäßigerweise mit einer Folie umwickelt, die eine definierte Oberfläche für die aufliegende innere Lage des Verstärkungselements schafft. Bei einer solchen Vorrichtung kann auf eine Konizität oder eine Abziehvorrichtung verzichtet werden. Wenn zur Entformung die Stangen nämlich radial zusammengefahren werden, ist der Wickelkörper zur Abnahme frei. Bevorzugt weist die Vorrichtung eine mit einem die Kunststoffmatrix bildenden kunstharzbefüllte Tränkeinrichtung auf, die so angeordnet ist, dass der Faden vor dem Ablegen auf dem Wickelkern hindurchgeleitet wird. Alternativ können die Fasern bzw. Fäden auch mittels RTM- oder RIM-Verfahren mit dem Matrixharz imprägniert werden.

Die Vorrichtung kann eine Zerlegestation aufweisen, die eingerichtet ist, die zwischen den Kanten gebildeten Segmente nach dem Aushärten des Wickelkörpers herauszutrennen.

Weitere Aufgaben, Merkmale und Vorteile der Erfindung werden nachfolgend anhand eines Ausführungsbeispieles mit Hilfe der Zeichnungen erläutert. Es zeigen:
- Figur 1: eine perspektivische Darstellung der Wickelvorrichtung mit Vierkantdorn;
- Figur 2: ein Beispiel eines Wickelkerns der Vorrichtung beinhaltend zwei Stangen;
- Figur 3: ein Beispiel eines Wickelkerns bestehend aus einem Dreikantdorn;
- Figur 4: ein fertig ausgehärteter fünfkantiger Wickelkörper;
- Figur 5: eine dreidimensionale Ansicht eines Beispiels der Wickelvorrichtung mit Flechtkopf und
- Figur 6: eine dreidimensionale Ansicht eines Beispiels der Wickelvorrichtung zum Wickeln vorgefertigter textiler Gelege und
- Figur 7: eine Schnittdarstellung durch ein weiteres Beispiel eines Wickelkerns mit gebogenen Segmenten.

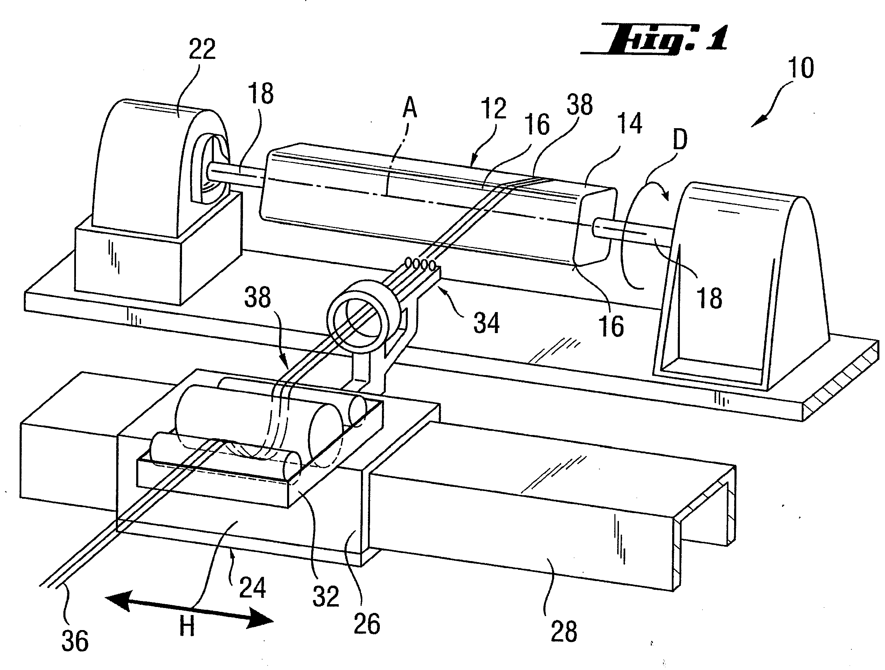

Das in Figur 1 gezeigte Beispiel der Wickelvorrichtung 10 weist einen um seine Längsachse A drehbar gelagerten Wickelkern 12 in Form eines Vierkantrohres oder -dorns 14 mit abgerundeten Kanten 16 auf. Die abgerundeten Kanten 16 verringern die mechanische Beanspruchung des Fadens beim Wickeln und somit die Gefahr, dass dieser reißt. Das Vierkantrohr 14 ist mittels einer Welle 18 beidseits drehbar gelagert und wird von einem Antrieb 22 in Drehung versetzt.

Die Wickelvorrichtung 10 weist ferner eine entlang der Längsachse A hin- und her bewegbare Zuführung 24 auf. Diese wird gebildet durch einen Wagen 26, der mittels Linearantrieb auf einer Schiene 28, die parallel zur Längsachse A ausgerichtet ist, hin- und herbewegt wird. Der Wagen 26 weist eine mit Kunstharz gefüllte Tränkwanne 32 sowie Führungselemente 34 zum Zuführen eines aus mehreren Fäden 36 bestehenden Fadenbündels 38 auf.

Durch die Drehbewegung D des Wickelkerns 12 einerseits und die damit gekoppelte Hin- und Herbewegung H der Zuführung 24 andererseits kann eine bestimmte, vorprogrammierte Wickelstruktur erzeugt werden. Eine nicht dargestellte Steuerung für den Antrieb 22 des Wickelkerns 12 und den Linearantrieb der Zuführung 24 koordiniert die Bewegungen unter Berücksichtigung der Querschnittsform des Wickelkerns 12 so, dass sich die gewünschte Wickelstruktur ergibt.

Um den Wickelkörper von einem solchen Wickelkern 12 abziehen zu können, verjüngt sich der Wickelkern zu einem Ende hin leicht; in Figur 1 jedoch nicht erkennbar.

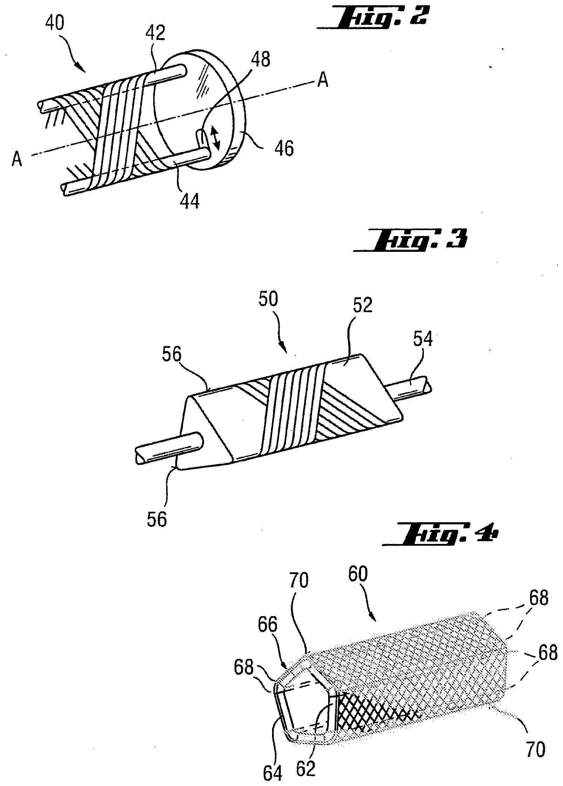

In den Figuren 2 und 3 sind zwei Alternative des Wickelkerns ausschnittsweise dargestellt. Der Wickelkern 40 gemäß Figur 2 weist zwei gegenüberliegende und zur Längsachse A gleich beabstandete Stangen 42 und 44 mit rundem Querschnitt auf, die an beiden Enden jeweils mittels einer Scheibe 46 fixiert sind, von denen zur Vereinfachung hier nur eine Scheibe 46 dargestellt ist. Während die erste Stange 42 einen unveränderbaren Abstand zur Längs- oder Mittelachse A aufweist, kann die zweite Stange 44 entlang einer Führungsbahn 48 radial hin- und herbewegt werden. Auf diese Weise kann der Abstand zwischen den Stangen verringert werden, um den Wickelkörper zur Entformung freizugeben.

Um die beiden Stangen 42, 44 wird ein Wickelkörper in Form eines hohlen Flachprofils erzeugt. Unter mehrkantigem Wickelkern im Sinne der Erfindung sind folglich auch solche zu verstehen, die im Querschnitt wenigstens zwei Umlenkpunkte definieren, um die der Wickelkörper gewickelt wird. Wie auch die abgerundeten Kanten 16 des Vierkantdorns 14 gemäß Figur 1 verringert der runde Querschnitt der Stangen 42, 44 die Gefahr einer Beschädigung der Fäden beim Wickeln.

Der Wickelkern 50 gemäß Figur 3 wird aus einem Rohr oder Dorn 52 mit dreieckigem Querschnitt gebildet, das wiederum beidseits mittels einer Welle 54 gelagert ist. Auch hier sind die Längskanten 56 abgerundet, so dass die Fasern oder Fäden beim Wickeln nicht beschädigt werden.

In Figur 4 ist ein Wickelkörper 60 dargestellt, der auf einem fünfkantigen Wickelkern aufgewickelt wurde und nach dem Aushärten von diesem abgezogen wurde. Auf seiner Innenseite befindet sich die etwas dickere Tragschicht 62, die zuerst auf dem Wickelkern abgelegt wurde. Auf deren Außenseite wurde anschließend noch vor dem Aushärten die etwas dünnere Gleitschicht 64 abgelegt.

Zur Herstellung ebener Gleitelemente werden ausgehend von dem in Figur 4 gezeigten Wickelkörper 60 die fünf zwischen den Kanten gebildeten ebenen Wickelkörpersegmente 66 jeweils entlang der markierten Trennlinien 68 herausgetrennt. Die Trennlinien 68 liegen vorzugsweise so nah wie möglich an den abgerundeten Kanten 70, um den Verschnitt möglichst gering zu halten. Das Heraustrennen geschieht in einer Zerlegestation vorzugsweise mittels einer Säge, eines Messers oder einer Trennscheibe.

Aufgrund unterschiedlicher Schrumpfungseigenschaften der gewickelten Materialien besteht die Gefahr, dass die ebenen Segmente nach dem Aushärten eine leichte Wölbung aufweisen. Es kann daher insbesondere für die Herstellung hochpräziser Gleitelemente notwendig sein, dass die auf die oben beschriebene Weise herausgetrennten Segmente mechanisch bzw. spanabhebend nachbearbeitet werden müssen, bis sie die erforderliche Planheit aufweisen. Sie können dazu beispielsweise gefräst oder geschliffen werden. Hierfür eignen sich insbesondere Gleitelementkunststoffe mit Fäden bzw. Fasern als Verstärkungselemente, die aus Polyesterfilamenten bestehen, in welche PTFE-Partikel eingesponnen sind.

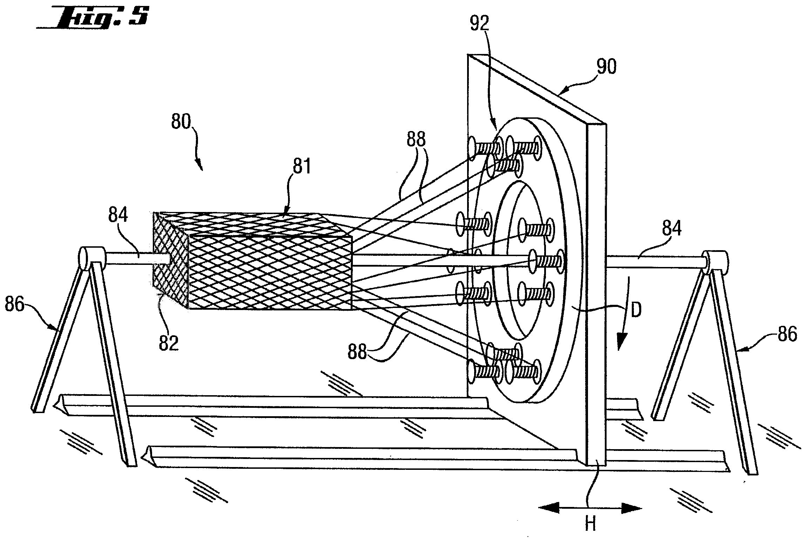

Figur 5 zeigteine alternative Wickelvorrichtung 80. Diese weist einen Wickelkern 81 in Form eines quadratischen Vierkantrohrs oder Dorns 82 auf, der über eine Achse 84 beidseits starr an einem Gestellt 86 aufgehängt ist. Auf dem Dorn 82 werden gleichzeitig mehrere Fasern bzw. Fäden 88 abgelegt. Dies geschieht mittels der entlang der Längsachse des Wickelkerns 81 hin- und her, wie durch Pfeil H verdeutlicht, bewegbaren Zuführung 90, die einen Flechtkopf 92 aufweist, der um die Längsachse gemäß Pfeil D drehbar gelagert ist. Daher kann im Fall dieser Vorrichtung der Wickelkern 81 starr angeordnet sein - es kommt nur auf die Relativbewegung zwischen dem Wickelkern 80 und dem Flechtkopf 92 an. Durch eine Überlagerung der Drehbewegung D des Flechtkopfes 92 und der linearen Hin- und Herbewegung H der Zuführung 90 wird eine Wickelstruktur, in diesem Fall eine gewebeartige Wickelstruktur, erzeugt. Aufgrund der mehrfach überkreuzten Fasern oder Fäden 88 lassen sich sehr komplizierte, von der geodätischen Linie abweichende Faserorientierungen realisieren, so dass die Fasern bzw. Fäden 88 auch auf sehr komplexe Wickelkörper abgelegt werden können.

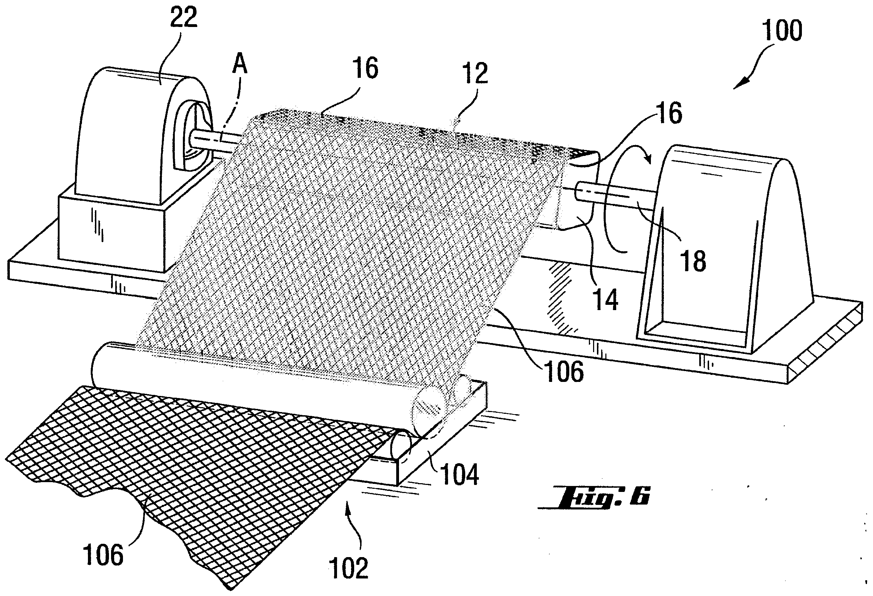

Figur 6 zeigt eine weitere Wickelvorrichtung 100. Diese weist denselben um seine Längsachse A drehbar gelagerten Wickelkern 12 in Form eines Vierkantdorns 14 mit abgerundeten Kanten 16 auf, wie in Figur 1 gezeigt. Das Vierkantrohr 14 ist ebenso mittels einer Welle 18 beidseits drehbar gelagert und wird von einem Antrieb 22 in Drehung versetzt.

Die Wickelvorrichtung 100 weist im Unterschied zu der aus Figur 1 jedoch eine ortsfeste Zuführung 102 mit einer mit Kunstharz gefüllten Tränkwanne 104 zum Zuführen eines breiten, vorgefertigten textilen Geleges 106 auf. Die Breite der Zuführung und des Geleges ist auf die Breite des Wickeldorns 14 abgestimmt, sodass mit jeder Umdrehung des Wickelkerns eine komplette Lage des Verstärkungselements auf dem Wickeldorn 14 abgelegt wird.

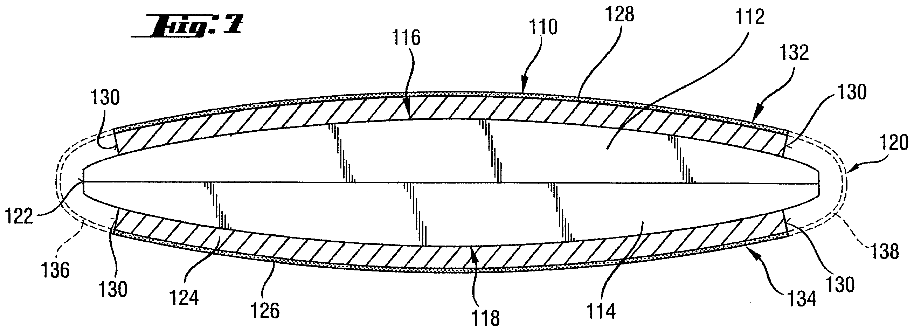

In Figur 7 ist ein Beispiel eines Wickelkerns 110 im Querschnitt dargestellt, welcher aus zwei flachen Halbformen 112 und 114 besteht, die auf ihren gegenüberliegend nach außen gewandten Seite jeweils einen großen Krümmungsradius aufweisen, d.h. jeweils ein bogenförmiges Segment 116 bzw. 118 einer Zylindermantelfläche bilden. Der so geformte Wickelkern weist im Bereich des Auslaufs der Segmente, d.h. im Bereich der Grenzfläche der flachen Halbformen 112, 114, beiderseits jeweils Kanten 120 bzw. 122 auf.

Durch eines der zuvor beschriebenen Wickelverfahren wird auf dem Wickelkörper 110 zunächst eine Tragschicht 124 und darauf eine Gleitschicht 126 mit einem linsenförmigen Querschnitt abgelegt. Aus dem so gebildeten Wickelkörper 128 mit linsenförmigem Querschnitt werden nach dem Aushärten der Kunststoffmatrix entlang von Trennlinien 130 zwei bogenförmige Wickelkörpersegmente 132, 134 herausgetrennt, die dann weiter zu den bogenförmigen Gleitelementen verarbeitet werden können. Die gestrichelt dargestellten Abschnitte 136, 138 im Kantenbereich sind Verschnitt. Auf diese Weise können Gleitelemente für Radialgleitager mit sehr viel größerem Durchmesser erzeugt werden als es die Abmessungen eines Dorns mit rundem Querschnitt zulassen.

Die Erfindung beschränkt sich ersichtlich nicht auf die gezeigten Ausführungsbeispiele. Der Wickelkern der Wickelvorrichtung kann im Grunde jeglichen mehrkantigen Querschnitt aufweisen. Es können im Rahmen der Erfindung ferner ein- oder mehrschichtige Gleitelemente erzeugt werden, wobei weder die Verstärkungselemente noch die Kunststoffmatrix auf die Auswahl genannter Materialien beschränkt sind.

### Bezugszeichenliste

- 10: Wickelvorrichtung
- 12: Wickelkern
- 14: Vierkantrohr, Wickeldorn
- 16: abgerundete Kante
- 18: Welle
- 22: Antrieb
- 24: Zuführung
- 26: Wagen
- 28: Schiene
- 32: Tränkwanne
- 34: Führungselement
- 36: Faden
- 38: Fadenbündel
- 40: Wickelkern
- 42: Stange
- 44: Stange
- 46: Scheibe
- 48: Führungsbahn
- 50: Wickelkern
- 52: Dreikantrohr, Wickeldorn
- 54: Welle
- 56: abgerundete Kante
- 60: Wickelkörper
- 62: Tragschicht
- 64: Gleitschicht
- 66: ebenes Segment
- 68: Trennlinie
- 70: abgerundete Kante
- 80: Wickelvorrichtung
- 81: Wickelkern
- 82: Vierkantrohr, Wickeldorn
- 84: Achse
- 86: Gestellt
- 88: Faden
- 90: Zuführung
- 92: Flechtkopf
- 100: Wickelvorrichtung
- 102: Zuführung
- 104: Tränkwanne
- 106: textiles Gelege
- 110: Wickelkern
- 112: Halbform
- 114: Halbform
- 116: bogenförmiges Segment
- 118: bogenförmiges Segment
- 120: Kante
- 122: Kante
- 124: Tragschicht
- 126: Gleitschicht
- 128: Wickelkörper
- 130: Trennlinie
- 132: bogenförmiges Wickelkörpersegment
- 134: bogenförmiges Wickelkörpersegment
- 136: Verschnitt
- 138: Verschnitt
- D: Drehbewegungspfeil
- H: Hin- und Her-Bewegungspfeil

## Patentansprüche

1. Verfahren zur Herstellung eines Gleitelements, welches wenigstens eine Gleitschicht (64, 126) auf Basis eines faserverstärkten Kunststoffes mit einer Kunststoffmatrix und einem wenigstens einen Faden (36) enthaltenden Verstärkungselement aufweist, wobei das Verstärkungselement unter Zugabe eines die Kunststoffmatrix bildenden Kunstharzes auf einem mehrkantigen Wickelkern (12, 40, 50, 81, 110) abgelegt und dass aus dem so gebildeten rohrförmigen, mehrkantigen Wickelkörper nach Aushärtung die zwischen den Kanten (70, 120, 122) gebildeten Segmente (66, 132, 134) herausgetrennt werden,
**dadurch gekennzeichnet,**
**dass** der Faden (36) ein Kunststofffaden aus Polyesterfilamenten ist, in welche nicht zusammenhängende PTFE-Partikel eingesponnen sind.

2. Verfahren nach Anspruch 1, **dadurch gekennzeichnet,**
**dass** die herausgetrennten Segmente (66, 132, 134) spanabhebend nachbearbeitet werden.

3. Verfahren nach einem der vorstehenden Ansprüche,
**dadurch gekennzeichnet,**
**dass** dem Kunstharz PTFE-Partikel beigemischt werden.

4. Verfahren nach einem der vorstehenden Ansprüche,
**dadurch gekennzeichnet,**
**dass** das Gleitelement eine Tragschicht (62, 124) auf Basis eines faserverstärkten Kunststoffes mit einer Kunststoffmatrix und einem wenigstens eine Faser oder einen Faden (36) enthaltenden Verstärkungselement aufweist, wobei zunächst das Verstärkungselement des Tragschichtkunststoffes und anschließend das Verstärkungselement des Gleitschichtkunststoffes jeweils unter Zugabe eines die Kunststoffmatrix bildenden Kunstharzes auf dem Wickelkern (12, 40, 50, 81, 110) abgelegt wird.

5. Verfahren nach einem der Ansprüche 1 bis 3,
**dadurch gekennzeichnet,**
**dass** das Gleitelement eine Tragschicht auf Basis eines faserverstärkten Kunststoffes mit einer Kunststoffmatrix und einem wenigstens eine Faser oder einen Faden (36) enthaltenden Verstärkungselement aufweist, wobei zunächst das Verstärkungselement des Gleitschichtkunststoffes und anschließend das Verstärkungselement des Tragschichtkunststoffes jeweils unter Zugabe eines die Kunststoffmatrix bildenden Kunstharzes auf dem Wickelkern (12, 40, 50, 81, 110) abgelegt wird.

6. Verfahren nach einem der Ansprüche 4 oder 5
**dadurch gekennzeichnet,**
**dass** das Verstärkungselement des Tragschichtkunststoffes aus einer Glasfaser gebildet wird.

7. Verfahren nach einem der vorstehenden Ansprüche,
**dadurch gekennzeichnet,**
**dass** beim Ablegen wenigstens eines Fadens (36) des Gleit- und/oder Tragschichtkunststoffes der Wickelkern (12, 40, 110) um seine Längsachse A gedreht und der Faden (36) entlang der Längsachse des Wickelkerns in einer Hin- und Herbewegung zugeführt wird.

8. Verfahren nach einem der vorstehenden Ansprüche,
**dadurch gekennzeichnet,**
**dass** gleichzeitig mehrere Fäden (36) in einem Fadenbündel (38) auf dem Wickelkern (12, 40, 81) abgelegt werden.

9. Verfahren nach Anspruch 7, **dadurch gekennzeichnet,**
**dass** gleichzeitig mehrere Fäden (36) beim Ablegen miteinander verflochten werden.

10. Verfahren nach einem der vorstehenden Ansprüche,
**dadurch gekennzeichnet,**
**dass** das Verstärkungselement des Gleit- und/oder Tragschichtkunststoffes in Form eines vorgefertigten textilen Geleges (106) auf dem um seine Längsachse A drehenden Wickelkern (12, 40, 110) abgelegt wird.

11. Gleitelement wenigstens mit einer Gleitschicht (64, 126) auf Basis eines faserverstärkten Kunststoffes mit einer Kunststoffmatrix und einem wenigstens einen Faden (36) enthaltenden Verstärkungselement, wobei das Verstärkungselement eine Wickelstruktur aufweist, die durch Wickeln des wenigstens einen Fadens (36) auf einem mehrkantigen Wickelkern (12, 40, 50, 81, 110) im Bereich der zwischen den Kanten (70, 120, 122) gebildeten Segmente (66, 116, 118) erzeugt wurde,
**dadurch gekennzeichnet,**
**dass** der Faden (36) ein Kunststofffaden aus Polyesterfilamenten ist, in welche nicht zusammenhängende PTFE-Partikel eingesponnen sind.

## Claims

1. Method for producing a sliding element which has at least one sliding layer (64, 126) based on a fibre-reinforced plastics material having a plastics material matrix and a reinforcement element which contains at least one thread (36), wherein the reinforcement element with the addition of a synthetic resin which forms the plastics material matrix is deposited on a polygonal winding core (12, 40, 50, 81, 110) and the segments (66, 132, 134) formed between the edges (70, 120, 122) are separated from the tubular polygonal winding member formed in this manner after hardening,
**characterised in that**
the thread (36) is a plastics material thread of polyester filaments in which non-coherent PTFE particles are spun.

2. Method according to claim 1, **characterised in that** the separated segments (66, 132, 134) are subsequently processed in a cutting manner.

3. Method according to either of the preceding claims,
**characterised in that**
PTFE particles are added to the synthetic resin.

4. Method according to any one of the preceding claims,
**characterised in that**
the sliding element has a carrier layer (62, 124) based on a fibre-reinforced plastics material having a plastics material matrix and a reinforcement element which contains at least one fibre or a thread (36), wherein initially the reinforcement element of the carrier layer plastics material and subsequently the reinforcement element of the sliding layer plastics material with a synthetic resin which forms the plastics material matrix being added is deposited on the winding core (12, 40, 50, 81, 110), respectively.

5. Method according to any one of claims 1 to 3,
**characterised in that**
the sliding element has a carrier layer based on a fibre-reinforced plastics material having a plastics material matrix and a reinforcement element which contains at least one fibre or a thread (36), wherein initially the reinforcement element of the sliding layer plastics material and subsequently the reinforcement element of the carrier layer plastics material with a synthetic resin which forms the plastics material matrix being added is deposited on the winding core (12, 40, 50, 81, 110).

6. Method according to either claim 4 or claim 5,
**characterised in that**
the reinforcement element of the carrier layer plastics material is formed of a glass fibre.

7. Method according to any one of the preceding claims,
**characterised in that**,
during the depositing of at least one thread (36) of the sliding and/or carrier layer plastics material, the winding core (12, 40, 110) is rotated about the longitudinal axis A thereof and the thread (36) is supplied along the longitudinal axis of the winding core in a back-and-forth movement.

8. Method according to any one of the preceding claims,
**characterised in that**
at the same time a plurality of threads (36) are deposited in a thread bundle (38) on the winding core (12, 40, 81).

9. Method according to claim 7, **characterised in that**
at the same time a plurality of threads (36) are interwoven with each other during the depositing operation.

10. Method according to any one of the preceding claims,
**characterised in that**
the reinforcement element of the sliding and/or carrier layer plastics material is deposited in the form of a prefabricated textile web (106) on the winding core (12, 40, 110) which rotates about the longitudinal axis A thereof.

11. Sliding element at least having a sliding layer (64, 126) based on a fibre-reinforced plastics material having a plastics material matrix and a reinforcement element which contains at least one thread (36), wherein the reinforcement element has a winding structure which was produced by winding the at least one thread (36) on a polygonal winding core (12, 40, 50, 81, 110) in the region of the segments (66, 116, 118) formed between the edges (70, 120, 122),
**characterised in that**
the thread (36) is a plastics material thread of polyester filaments in which non-coherent PTFE particles are spun.

## Revendications

1. Procédé de fabrication d'un élément coulissant muni d'au moins une couche de glissement (64, 126) à base d'une matière plastique renforcée par des fibres, comprenant une matrice en matière plastique et un élément de renfort renfermant au moins un fil (36), ledit élément de renfort étant déposé sur un noyau polygonal d'enroulement (12, 40, 50, 81, 110), avec adjonction d'une résine synthétique constituant ladite matrice en matière plastique, et les segments (66, 132, 134) formés entre les arêtes (70, 120, 122) étant séparés, après durcissement, d'avec le corps bobiné tubulaire et polygonal ainsi formé, **caractérisé par le fait**
**que** le fil (36) est un fil de matière plastique en des filaments de polyester dans lesquels des particules de PTFE non cohérentes sont incorporées par filage.

2. Procédé selon la revendication 1,
**caractérisé par le fait**
**que** les segments (66, 132, 134) séparés sont usinés ultérieurement, avec enlèvement de copeaux.

3. Procédé selon l'une des revendications précédentes,
**caractérisé par le fait**
**que** des particules de PTFE sont mélangées à la résine synthétique.

4. Procédé selon l'une des revendications précédentes,
**caractérisé par le fait**
**que** l'élément coulissant est pourvu d'une couche (62, 124) formant substrat à base d'une matière plastique renforcée par des fibres, comprenant une matrice en matière plastique et un élément de renfort renfermant au moins une fibre ou un fil (36), sachant que, tout d'abord l'élément de renfort de la matière plastique de la couche formant substrat, puis l'élément de renfort de la matière plastique de la couche de glissement, sont respectivement déposés sur le noyau d'enroulement (12, 40, 50, 81, 110) avec adjonction d'une résine synthétique constituant ladite matrice en matière plastique.

5. Procédé selon l'une des revendications 1 à 3,
**caractérisé par le fait**
**que** l'élément coulissant est pourvu d'une couche formant substrat à base d'une matière plastique renforcée par des fibres, comprenant une matrice en matière plastique et un élément de renfort renfermant au moins une fibre ou un fil (36), sachant que, tout d'abord l'élément de renfort de la matière plastique de la couche de glissement, puis l'élément de renfort de la matière plastique de la couche formant substrat, sont respectivement déposés sur le noyau d'enroulement (12, 40, 50, 81, 110) avec adjonction d'une résine synthétique constituant ladite matrice en matière plastique.

6. Procédé selon l'une des revendications 4 ou 5,
**caractérisé par le fait**
**que** l'élément de renfort de la matière plastique de la couche formant substrat est constitué d'une fibre de verre.

7. Procédé selon l'une des revendications précédentes,
**caractérisé par le fait**
**que**, lors du dépôt d'au moins un fil (36) de la matière plastique de la couche de glissement et/ou de la couche formant substrat, le noyau d'enroulement (12, 40, 110) est animé d'une rotation autour de son axe longitudinal A, et ledit fil (36) est délivré en un mouvement de va-et-vient le long dudit axe longitudinal du noyau d'enroulement.

8. Procédé selon l'une des revendications précédentes,
**caractérisé par le fait**
**que** plusieurs fils (36) sont simultanément déposés sur le noyau d'enroulement (12, 40, 110), en un faisceau (38) de fils.

9. Procédé selon la revendication 7,
**caractérisé par le fait**
**que** plusieurs fils (36) sont mutuellement imbriqués en simultanéité au cours du dépôt.

10. Procédé selon l'une des revendications précédentes,
**caractérisé par le fait**
**que** l'élément de renfort de la matière plastique de la couche de glissement et/ou de la couche formant substrat est déposé, sous la forme d'un canevas textile préfabriqué (106), sur le noyau d'enroulement (12, 40, 110) accomplissant une rotation autour de son axe longitudinal A.

11. Elément coulissant muni d'au moins une couche de glissement (64, 126) à base d'une matière plastique renforcée par des fibres, comprenant une matrice en matière plastique et un élément de renfort renfermant au moins un fil (36), lequel élément de renfort est doté d'une structure bobinée ayant été produite par bobinage dudit fil (36) à présence minimale, sur un noyau polygonal d'enroulement (12, 40, 50, 81, 110), dans la région des segments (66, 116, 118) formés entre les arêtes (70, 120, 122),
**caractérisé par le fait**
**que** le fil (36) est un fil de matière plastique en des filaments de polyester dans lesquels des particules de PTFE non cohérentes sont incorporées par filage.
